# EUROPÄISCHE PATENTSCHRIFT

(11) **EP 2 766 973 B1**
(45) Veröffentlichungstag und Bekanntmachung des Hinweises auf die Patenterteilung: **24.02.2021**
(21) Anmeldenummer: 12756147.0
(22) Anmeldetag: 27.08.2012
(51) Int. Cl.: H02J 50/10, H02J 50/80, H02J 7/00

(54) **VORRICHTUNG UND VERFAHREN ZUR INDUKTIVEN ÜBERTRAGUNG VON ELEKTRISCHER ENERGIE**
APPARATUS AND METHOD FOR INDUCTIVELY TRANSMITTING ELECTRICAL ENERGY
DISPOSITIF ET PROCÉDÉ DE TRANSMISSION D'ÉNERGIE ÉLECTRIQUE PAR INDUCTION

(30) Priorität: 14.10.2011 DE 102011084485
(43) Veröffentlichungstag der Anmeldung: 20.08.2014
(73) Patentinhaber: Robert Bosch GmbH, 70442 Stuttgart (DE)
(72) Erfinder: MACK, Juergen, 73035 Goeppingen (DE)
(86) Internationale Anmeldenummer: PCT/EP2012/066578
(87) Internationale Veröffentlichungsnummer: WO 2013/053530

(56) Entgegenhaltungen:
- WO-A1-01/31557
- US-A1- 2010 176 659
- US-A1- 2011 169 446

## Beschreibung

Die Erfindung betrifft ein Energieübertragungssystem, mit einer eine Primärspule aufweisenden Primärseite und mit einer eine Vorrichtung aufweisenden Sekundärseite, zur induktiven Übertragung von elektrischer Energie, mit wenigstens einer sekundärseitigen Induktionsspule, die mit einem Verbraucher und/oder mit einer wiederaufladbaren Batterie verbunden ist, und mit einer Kommunikationseinrichtung, die zumindest eine Steuereinheit umfasst und zur Lastmodulation der Induktionsspule ausgebildet ist.

Ferner betrifft die Erfindung ein Verfahren zum Betreiben des oben beschriebenen Energieübertragungssystems.

### Stand der Technik

Vorrichtungen zur induktiven Übertragung von elektrischer Energie sind aus dem Stand der Technik prinzipiell bekannt. Sie umfassen üblicherweise eine Primärseite, auf welcher die zu übertragende Energie bereitgestellt und gesendet wird, sowie eine Sekundärseite, welche die übertragene Energie empfängt und verarbeitet. Für die induktive Übertragung weisen dabei Sekundär- und Primärseite jeweils eine Induktionsspule auf. Die Induktionsspule der Sekundärseite wird durch die Induktionsspule der Primärseite angeregt und leitet dadurch Energie in das System der Sekundärseite, die beispielsweise einem Verbraucher oder einer wiederaufladbaren Batterie zugeführt wird. Eine der Sekundärseite zugeordnete Kommunikationseinrichtung erlaubt dabei das Übertragen von Informationen von der Sekundärseite zur Primärseite, beispielsweise um vor einem Aufladevorgang zu verifizieren, dass der Aufladevorgang erfolgen darf, beispielsweise weil es sich um ein entsprechend ausgebildetes Modell handelt, das mit dem Aufladegerät beziehungsweise der Primärseite sicher zusammenwirkt. Bekannte Kommunikationseinrichtungen arbeiten dabei nach dem sogenannten Lastmodulationsverfahren, wobei die Kommunikation in der Regel zur Regulierung des Energietransfers notwendig ist. Durch das Lastmodulationsverfahren wird die Last der Induktionsspule auf der Sekundärseite moduliert. Die dadurch verursachten Auswirkungen können auf der Primärseite empfangen und durch eine entsprechende Auswerteeinheit ausgewertet werden. Derartige Verfahren sind beispielsweise in RFID-Systemen in Verwendung (RFID = radio-frequency identification/Identifizierung mithilfe elektromagnetischer Wellen). Im Gegensatz zu RFID-Anwendungen, bei denen die zu übertragende Leistung eher gering ausfällt, fallen die zu übertragenden Leistungen/Energien bei induktiven Energieübertragungssystemen wesentlich größer aus. Somit ist bei der Lastmodulation mit einer erheblichen Verlustleistung durch die sekundärseitige Kommunikationseinrichtung zu rechnen. Die Verluste verringern den Wirkungsgrad des gesamten Systems und tragen zu einer merklichen Erwärmung, insbesondere der Batterie der Sekundärseite, bei. Dies kann dann kritisch werden, wenn vorgegebene Maximaltemperaturen der Batterie erreicht beziehungsweise überschritten werden.

Aus der Offenlegungsschrift WO 01/31557 A1 ist bereits eine Vorrichtung der gattungsgemäßen Art bekannt.

### Offenbarung der Erfindung

Die Erfindung ist im beigefügten Anspruchssatz beschrieben.

Das erfindungsgemäße Energieübertragungssystem mit den Merkmalen des Anspruchs 1 zeichnet sich dadurch aus, dass die Kommunikationseinrichtung einen Gleichspannungswandler aufweist, dessen Ausgang mit dem Verbraucher/der Batterie verbunden ist und dessen Eingang mit der Induktionsspule verbunden ist, wobei die Steuereinheit den Gleichspannungswandler zur Lastmodulation der Induktionsspule ansteuert. Erfindungsgemäß ist also vorgesehen, dass die für die Lastmodulation notwendige Energie nicht, wie bisher beispielsweise über einen Widerstand in Wärme umgesetzt wird, sondern der Batterie oder dem Verbraucher zugeführt wird. Die Verlustleistungen werden dadurch im Vergleich zu aus dem Stand der Technik bekannten Vorrichtungen wirkungsvoll und deutlich verringert. Während eines Kommunikationsvorgangs wird somit die Energie zwar von der Primärseite aus auf die Induktionsspule übertragen, jedoch wird diese nicht in Wärme umgewandelt, sondern insbesondere zum Laden der Batterie und/oder zur Versorgung des Verbrauchers verwendet, sodass eine Art Energie-Recycling bewerkstelligt wird. Darüber hinaus wird die Batterie vor kritischen Temperaturen geschützt.

Erfindungsgemäß ist weiterhin vorgesehen, dass dem Ausgang des Gleichspannungswandlers zumindest ein erstes Schaltelement zugeordnet ist. Durch Betätigen des ersten Schaltelements wird vorzugsweise die Verbindung zu der Batterie oder dem Verbraucher unterbrochen. Dadurch kann die übertragene Energie effizient zur Kommunikation genutzt werden.

Vorzugsweise ist zwischen dem ersten Schaltelement und dem Gleichspannungswandler ein Knotenpunkt wenigstens eines ersten gegen Masse geschalteten Kondensators vorgesehen. Der Kondensator kann zur Zwischenspeicherung von der bei der Kommunikation von dem Gleichspannungswandler abgegebenen Energie genutzt werden. Vorzugsweise wird das erste Schaltelement durch die Steuereinheit geschlossen, wenn die an dem Kondensator anliegende Spannung einen vorgebbaren Wert, insbesondere die Batteriespannung übersteigt, um einen Energieaustausch zwischen dem Kondensator und der Batterie in Richtung der Batterie zu ermöglichen.

Gemäß einer vorteilhaften Weiterbildung der Erfindung ist vorgesehen, dass der Batterie ein zweites Schaltelement zugeordnet ist, das zum Verbinden und/oder Trennen der Batterie mit einem Masseanschluss dient. Das zweite Schaltelement wird zweckmäßigerweise durch die Steuereinheiten geöffnet, wenn ein Laden der Batterie beziehungsweise eine Versorgung des Verbrauchers unterbunden werden soll. Andernfalls würde der Ladestrom beziehungsweise der Verbraucherstrom die Lastmodulation negativ beeinflussen, wodurch unter Umständen eine Erkennung der Kommunikation auf der Primärseite erschwert beziehungsweise unmöglich gemacht werden kann. Besonders bevorzugt öffnet die Steuereinheit daher das zweite Schaltelement, während sie den Gleichspannungswandler zur Lastmodulation ansteuert. Somit wird zu jeder Zeit sichergestellt, dass eine erfolgreiche Kommunikation stattfindet. Das zweite Schaltelement wird zweckmäßigerweise auch dann geöffnet, wenn die Batterie nicht oder nicht mehr geladen werden darf, beispielsweise wenn sie ihre Speicherkapazität erreicht hat oder eine Grenztemperatur überschritten wurde.

Gemäß einer bevorzugten Weiterbildung der Erfindung ist vorgesehen, dass zwischen dem ersten Schaltelement und der Batterie eine Freilaufdiode vorgesehen ist, die ein unerwünschtes Entladen der Batterie und/oder eines zwischen Induktionsspule und Batterie angeordneten beziehungsweise geschalteten Kondensators verhindert. Die Freilaufdiode ist derart zwischengeschaltet, dass sie den Stromfluss in Richtung der Batterie zulässt und dadurch ein Rückfließen der Energie auf einfache Art und Weise verhindert.

Besonders bevorzugt ist der Gleichspannungswandler als Sperrwandler oder als Inverswandler ausgebildet. Im Unterschied zu dem Inverswandler kann der Sperrwandler eine galvanische Trennung besitzen.

Dem Sperrwandler ist vorzugsweise ein drittes Schaltelement zugeordnet, das durch fest definierte Einschaltzeiten eine Stromerfassung des Sperrwandlerspulenstroms auf der Eingangsseite erübrigt. Die Steuereinheit steuert den Gleichspannungswandler mit einer vorgebbaren Bitfolge an, die zur Lastmodulation in entsprechende Einschaltzeiten umgesetzt wird. Die Einschaltzeit des Sperrwandlers wird vorzugsweise durch die Kommunikationseinheit beziehungsweise die Steuereinrichtung und die gewünschte Bit-Länge der zu übertragenden Information vorgegeben.

Das erfindungsgemäße Verfahren mit den Merkmalen des Anspruchs 8 zum Betreiben eines Energieübertragungssystems, insbesondere gemäß einer der oben beschriebenen Ausführungsformen, zeichnet sich dadurch aus, dass die Kommunikationseinrichtung einen Gleichspannungswandler aufweist, dessen Ausgang mit dem Verbraucher und dessen Eingang mit der Induktionsspule verbunden wird, wobei die Steuereinheit den Gleichspannungswandler zur Lastmodulation ansteuert.

Weitere vorteilhafte Verfahrensschritte ergeben sich aus dem bereits zu dem Energieübertragungssystem Beschriebenen.

Im Folgenden soll die Erfindung anhand der Zeichnung näher erläutert werden. Dazu zeigen
- Figur 1: ein erstes Austührungsbeispiel eines Energieübertragungssystems zur induktiven Übertragung von elektrischer Energie und
- Figur 2: ein alternatives Ausführungsbeispiel des Energieübertragungssystems.

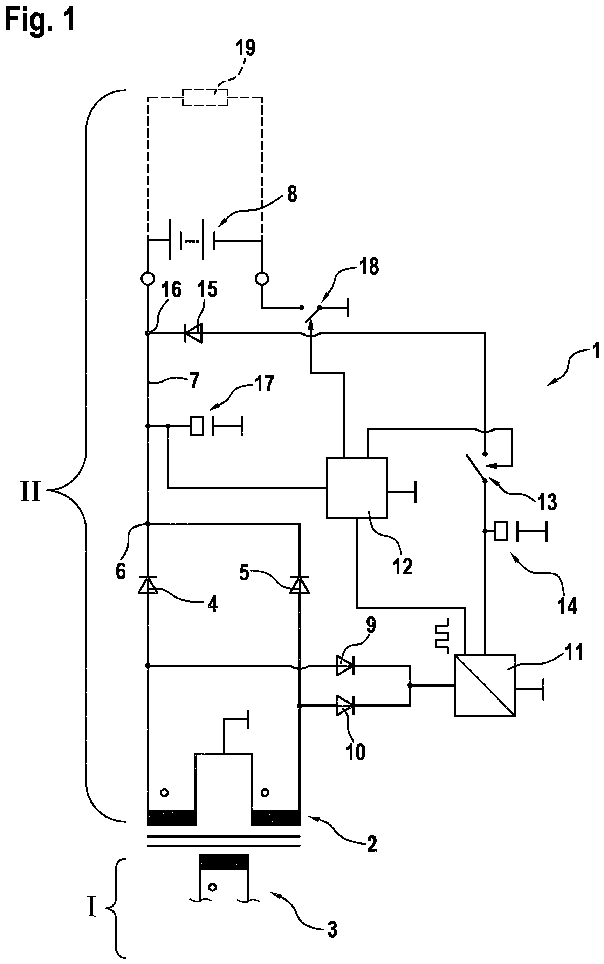

Figur 1 zeigt in einer vereinfachten Darstellung eine Vorrichtung 1 zur induktiven Energieübertragung. Die Vorrichtung 1 weist eine Induktionsspule 2 auf, die als Sekundärspule zum Empfangen von von einer Primärspule 3 gesendeter Energie dient. An die Anschlüsse der Induktionsspule 2 schließen sich zwei Freilaufdioden 4 und 5 an. Danach werden die Anschlüsse der Induktionsspule 2 an dem Knotenpunkt 6 zusammengeführt. An den Knotenpunkt 6 schließt sich eine Leitung 7 an, die mit einem Anschluss einer wiederaufladbaren Batterie 8 verbunden ist. Von den Anschlüssen der Induktionsspule 2 zweigen außerdem jeweils zwei Dioden 9, 10 aufweisende Leitungen ab, die hinter den Dioden 9, 10 zu einer gemeinsamen Leitung zusammengeführt und dem Eingang eines Gleichspannungswandlers 11 zugeführt werden. Der Gleichspannungswandler 11 wird von einer Steuereinrichtung 12 angesteuert. Am Ausgang des Gleichspannungswandlers ist ein erstes Schaltelement 13 vorgesehen, das ebenfalls durch die Steuereinrichtung 12 angesteuert beziehungsweise betätigt wird. Zwischen dem Schaltelement 13 und dem Gleichspannungswandler 11 ist weiterhin ein Kondensator 14 geschaltet. Über eine Diode 15 ist das Schaltelement 13 wiederum mit der Leitung 7 an einem Knotenpunkt 16 verbunden. In der Leitung 7, zwischen dem Knotenpunkt 6 und dem Knotenpunkt 16 ist ein weiterer Kondensator 17 an die Leitung 7 geschaltet. Weiterhin ist dem anderen Anschluss der Batterie 8 ein weiteres Schaltelement 18 zugeordnet, das die Batterie bevorzugt bei Bedarf mit einem Masseanschluss verbindet. Optional kann an die Batterie oder anstelle der Batterie ein Verbraucher 19 angeschlossen, gestrichelt dargestellt, vorgesehen sein.

Während die Induktionsspule 3 einen Teil der nicht weiter dargestellten Primärseite I des Energieübertragungssystems darstellt, bildet die Vorrichtung 1 die Sekundärseite II.

Während des Betriebs, also während eines Energieübertragungsvorgangs, findet eine Kommunikation zwischen der Primärseite I und der Sekundärseite II statt. Diese Kommunikation wird durch eine Kommunikationseinrichtung 20 bewerkstelligt, die im Wesentlichen von der Steuereinrichtung 12 und dem Gleichspannungswandler 11 gebildet wird. Die Steuereinheit 12 steuert den Gleichspannungswandler 11 durch Vorgabe eines Bitmusters derart an, dass er die Last der Induktionsspule 2 moduliert. Diese Lastmodulation kann auf der Primärseite I durch eine entsprechende, hier nicht dargestellte Auswerteeinheit erfasst und ausgewertet werden. Auf diese Art und Weise können beispielsweise Informationen über den Ladezustand der Batterie 8 an die Primärseite I übertragen werden. Vorzugsweise wird während der Kommunikation beziehungsweise während der Lastmodulation das Schaltelement 18 geöffnet, um ein Laden der Batterie 8 beziehungsweise eine Versorgung des Verbrauchers 19 zu unterbinden, damit der Ladestrom oder der Verbraucherstrom die Lastmodulation nicht beeinflusst. Das Schaltelement 18 wird vorzugsweise auch dann geöffnet, wenn die Batterie 8 nicht mehr weiter geladen werden darf, beispielsweise weil sie ihre Kapazität erreicht hat oder weil eine kritische Temperatur erreicht wurde.

Der Gleichspannungswandler 11 belastet dabei über die Dioden 9 und 10 die Sekundärwicklung des Transformators, also die Induktionsspule 2.

Ist das Schaltelement 13 geschlossen, so wird der Kondensator 17 und, wenn das Schaltelement 18 ebenfalls geschlossen ist, auch die Batterie 8 aufgeladen. Die Diode 15 verhindert eine Entladung der Batterie 8 oder des Kondensators 17 bei geschlossenem Schaltelement 13 in den Kondensator 14 oder in den Gleichspannungswandler 11. Besonders bevorzugt erfolgt die Ansteuerung des Schaltelements 13 in Abhängigkeit von der an dem Kondensator 14 anliegenden Spannung. Überschreitet diese beispielsweise die Batteriespannung der Batterie 8, so wird das Schaltelement 13 geschlossen, sodass ein Energieaustausch zwischen Kondensator 14 und der Batterie 8 stattfindet. Es ist aber auch eine zyklische Ansteuerung des Schaltelements 13 denkbar.

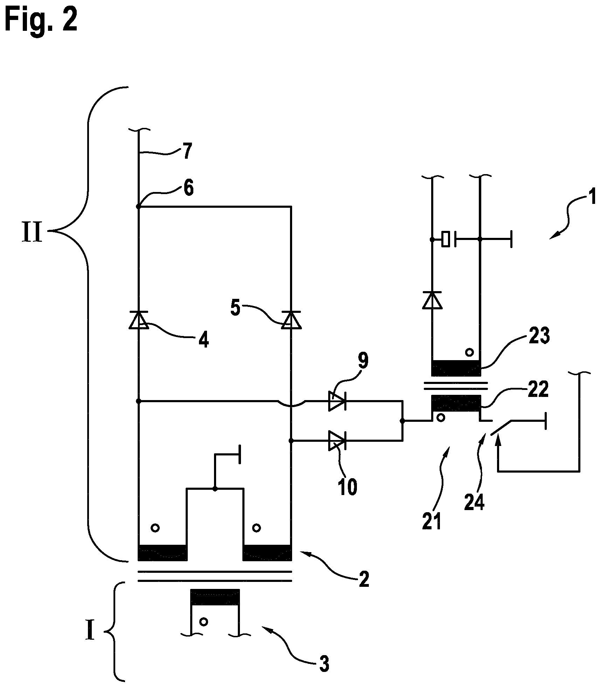

Figur 2 zeigt ein alternatives Ausführungsbeispiel des Energieübertragungssystems, wobei aus Figur 1 bereits bekannte Elemente mit den gleichen Bezugszeichen versehen sind, sodass insofern auf die obenstehende Beschreibung verwiesen wird.

Gemäß dem Ausführungsbeispiel von Figur 2 ist der Gleichspannungswandler als Sperrwandler 21, also als Transformator mit galvanischer Trennung ausgebildet. Der Transformator weist eine eingangsseitige Spule 22 und eine ausgangsseitige Spule 23 auf, wobei die eingangsseitige Spule 22 der Induktionsspule 2 und die ausgangsseitige Spule 23 der Batterie 8 beziehungsweise dem Verbraucher 19 zugeordnet ist. Der eingangsseitigen Spule 22 ist ein Schaltelement 24 vorgeschaltet. Durch fest definierte Einschaltzeiten für das Schaltelement 24 entfällt eine Stromerfassung des Sperrwandlerspulenstroms auf der Eingangsseite. Die Einschaltzeit wird zweckmäßigerweise durch die Kommunikationseinrichtung 20, insbesondere durch die Steuereinrichtung 12 durch die gewünschte Bit-Länge vorgegeben. Sperrwandler sind prinzipiell bekannt, sodass an dieser Stelle nicht näher darauf eingegangen werden soll. Alternativ zur Ausbildung als Sperrwandler kann auch ein sogenannter "Switched Capacitor Inverter" (Inverswandler) ohne galvanische Trennung vorgesehen sein.

## Patentansprüche

1. Energieübertragungssystem mit einer eine Primärspule (3) aufweisenden Primärseite (I) und mit einer eine Vorrichtung (1) aufweisenden Sekundärseite (II), zur induktiven Übertragung von elektrischer Energie, mit wenigstens einer sekundärseitigen Induktionsspule (2), die mit einem Verbraucher (19) und/oder mit einer wiederaufladbaren Batterie (8) der Vorrichtung (1) verbunden ist, und mit einer sekundärseitigen Kommunikationseinrichtung (20) zur Übertragung von Informationen an die Primärspule (3) während eines Energieübertragungsvorgangs, wobei die Kommunikationseinrichtung (20) zumindest eine Steuereinheit (12) umfasst und zur Lastmodulation der Induktionsspule (2) ausgebildet ist, wobei die Kommunikationseinrichtung (20) einen Gleichspannungswandler (11) aufweist, dessen Ausgang mit dem Verbraucher (19) und/oder mit der Batterie (8) und dessen Eingang mit der Induktionsspule (2) verbunden ist, und wobei die Steuereinheit (12) ausgebildet ist den Gleichspannungswandler (11) mit einer vorgebbaren Bitfolge anzusteuern, die zur Lastmodulation in entsprechende Einschaltzeiten umgesetzt wird, **dadurch gekennzeichnet, dass** die Steuereinheit (12) ausgebildet ist ein erstes Schaltelement (13) anzusteuern, welches den Ausgang des Gleichspannungswandlers (11) mit dem Verbraucher (19) und/oder der Batterie (8) verbindet oder trennt.

2. Energieübertragungssystem nach Anspruch 1, **dadurch gekennzeichnet, dass** zwischen dem ersten Schaltelement (13) und dem Gleichspannungswandler (11) ein Knotenpunkt wenigstens eines ersten gegen Masse geschalteten Kondensators (14) vorgesehen ist.

3. Energieübertragungssystem nach einem der vorhergehenden Ansprüche, **dadurch gekennzeichnet, dass** der Batterie (8) ein zweites Schaltelement (18) zugeordnet ist, das im geöffneten Zustand ein Aufladen der Batterie (8) verhindert.

4. Energieübertragungssystem nach Anspruch 3, **dadurch gekennzeichnet, dass** die Steuereinheit (12) ausgebildet ist das zweite Schaltelement (18) zu öffnen, während sie den Gleichspannungswandler (11) zur Lastmodulation ansteuert.

5. Energieübertragungssystem nach einem der vorhergehenden Ansprüche, **dadurch gekennzeichnet, dass** zwischen dem ersten Schaltelement (13) und der Batterie (8) eine Diode (15) vorgesehen ist, die ein unerwünschtes Entladen der Batterie (8) und/oder eines zwischen Induktionsspule (2) und Batterie (8) angeordneten, zweiten Kondensators (17) verhindert.

6. Energieübertragungssystem nach einem der vorhergehenden Ansprüche, **dadurch gekennzeichnet, dass** der Gleichspannungswandler (11) als Sperrwandler (21) oder als Inverswandler ausgebildet ist.

7. Energieübertragungssystem nach Anspruch 6, **dadurch gekennzeichnet, dass** ein drittes Schaltelement (24) den Sperrwandler (21) schaltet, wobei die Einschaltzeiten des Schaltelements (24) durch die Kommunikationseinrichtung (20), insbesondere durch die Steuereinrichtung (12), durch eine gewünschte Bit-Länge vorgegeben ist.

8. Verfahren zum Betreiben eines Energieübertragungssystems mit einer eine Primärspule (3) aufweisenden Primärseite (I) und mit einer eine Vorrichtung (1) aufweisenden Sekundärseite (II) zur induktiven Übertragung von elektrischer Energie, mit wenigstens einer sekundärseitigen Induktionsspule (2), die mit einem Verbraucher (19) und/oder mit einer wiederaufladbaren Batterie (8)) der Vorrichtung (1) verbunden ist, und mit einer sekundärseitigen Kommunikationseinrichtung (20) zur Übertragung von Informationen an die Primärspule (3) während eines Energieübertragungsvorgangs, wobei die Kommunikationseinrichtung (20) zumindest eine Steuereinheit (12) zur Lastmodulation umfasst, wobei die Kommunikationseinrichtung (20) einen Gleichspannungswandler (11) aufweist, dessen Ausgang mit dem Verbraucher (19) und/oder der Batterie (8) und dessen Eingang mit der Induktionsspule (2) verbunden ist, wobei der Gleichspannungswandler (11) von der Steuereinheit (12) mit einer vorgebbaren Bitfolge angesteuert wird, die zur Lastmodulation in entsprechende Einschaltzeiten umgesetzt wird, **dadurch gekennzeichnet, dass** ein erstes Schaltelement (13) von der Steuereinheit (12) derart angesteuert wird, dass der Ausgang des Gleichspannungswandlers (11) mit dem Verbraucher (19) und/oder der Batterie (8) verbunden oder getrennt wird.

## Claims

1. Energy transmission system having a primary side (I) that has a primary coil (3) and having a secondary side (II) that has a device (1), for inductively transmitting electrical energy, having at least one secondary-side induction coil (2) which is connected to a consumer (19) and/or to a rechargeable battery (8) of the device (1), and having a secondary-side communication apparatus (20) for transmitting information to the primary coil (3) during an energy transmission process, wherein the communication apparatus (20) comprises at least one control unit (12) and is designed for load modulation of the induction coil (2), wherein the communication apparatus (20) has a DC-to-DC converter (11), the output of which is connected to the consumer (19) and/or to the battery (8) and the input of which is connected to the induction coil (2), and wherein the control unit (12) is designed to drive the DC-to-DC converter (11) with a predefinable bit sequence which is converted to corresponding switch-on times for load modulation, **characterized in that** the control unit (12) is designed to drive a first switching element (13) which connects or disconnects the output of the DC-to-DC converter (11) to or from the consumer (19) and/or the battery (8).

2. Energy transmission system according to Claim 1, **characterized in that** a node of at least a first grounded capacitor (14) is provided between the first switching element (13) and the DC-to-DC converter (11).

3. Energy transmission system according to either of the preceding claims, **characterized in that** the battery (8) has an associated second switching element (18) that prevents charging of the battery (8) in the open state.

4. Energy transmission system according to Claim 3, **characterized in that** the control unit (12) is designed to open the second switching element (18) while it is driving the DC-to-DC converter (11) for load modulation.

5. Energy transmission system according to one of the preceding claims, **characterized in that** a diode (15) is provided between the first switching element (13) and the battery (8), which diode prevents undesired discharging of the battery (8) and/or of a second capacitor (17) arranged between the induction coil (2) and the battery (8) .

6. Energy transmission system according to one of the preceding claims, **characterized in that** the DC-to-DC converter (11) is designed as a flyback converter (21) or as an inverse converter.

7. Energy transmission system according to Claim 6, **characterized in that** a third switching element (24) switches the flyback converter (21), wherein the switch-on times of the switching element (24) are predefined by a desired bit length by the communication apparatus (20), in particular by the control apparatus (12).

8. Method for operating an energy transmission system having a primary side (I) that has a primary coil (3) and having a secondary side (II) that has a device (1), for inductively transmitting electrical energy, having at least one secondary-side induction coil (2) which is connected to a consumer (19) and/or to a rechargeable battery (8) of the device (1), and having a secondary-side communication apparatus (20) for transmitting information to the primary coil (3) during an energy transmission process, wherein the communication apparatus (20) comprises at least one control unit (12) for load modulation, wherein the communication apparatus (20) has a DC-to-DC converter (11), the output of which is connected to the consumer (19) and/or the battery (8) and the input of which is connected to the induction coil (2), wherein the DC-to-DC converter (11) is driven by the control unit (12) with a predefinable bit sequence which is converted to corresponding switch-on times for load modulation, **characterized in that** a first switching element (13) is driven by the control unit (12) in such a way that the output of the DC-to-DC converter (11) is connected to or disconnected from the consumer (19) and/or the battery (8).

## Revendications

1. Système de transfert d'énergie pourvu d'un côté primaire (I) comportant une bobine primaire (3) et d'un côté secondaire (II) comportant un dispositif (1), ledit système étant destiné au transfert d'énergie électrique par induction et comportant au moins une bobine d'induction côté secondaire (2) reliée à un consommateur (19) et/ou à une batterie rechargeable (8) du dispositif (1) et un moyen de communication côté secondaire (20) destiné à transmettre des informations à la bobine primaire (3) pendant un processus de transfert d'énergie, le moyen de communication (20) comprenant au moins une unité de commande (12) et étant conçu pour la modulation de charge de la bobine d'induction (2), le moyen de communication (20) comportant un convertisseur de tension continue (11) dont la sortie est reliée au consommateur (19) et/ou à la batterie (8) et dont l'entrée est reliée à la bobine d'induction (2), et l'unité de commande (12) étant conçue pour commander le convertisseur de tension continue (11) avec une séquence de bits prédéterminable qui est convertie en temps d'activation correspondants pour la modulation de charge, **caractérisé en ce que** l'unité de commande (12) est conçue pour commander un premier élément de commutation (13) qui connecte ou déconnecte la sortie du convertisseur de tension continue (11) et le consommateur (19) et/ou la batterie (8) .

2. Système de transfert d'énergie selon la revendication 1, **caractérisé en ce qu'**un point nodal d'au moins un premier condensateur (14) monté par rapport à la masse est prévu entre le premier élément de commutation (13) et le convertisseur de tension continue (11).

3. Système de transfert d'énergie selon l'une des revendications précédentes, **caractérisé en ce que** la batterie (8) est associée à un deuxième élément de commutation (18) qui empêche à l'état ouvert la charge de la batterie (8).

4. Système de transfert d'énergie selon la revendication 3, **caractérisé en ce que** l'unité de commande (12) est conçue pour ouvrir le deuxième élément de commutation (18) tandis qu'elle commande le convertisseur de tension continue (11) pour la modulation de charge.

5. Système de transfert d'énergie selon l'une des revendications précédentes, **caractérisé en ce qu'**une diode (15) est prévue entre le premier élément de commutation (13) et la batterie (8) et empêche une décharge indésirable de la batterie (8) et/ou d'un deuxième condensateur (17) disposé entre une bobine d'induction (2) et la batterie (8).

6. Système de transfert d'énergie selon l'une des revendications précédentes, **caractérisé en ce que** le convertisseur de tension continue (11) est conçu comme un convertisseur à oscillateur bloqué (21) ou un convertisseur inverse.

7. Système de transfert d'énergie selon la revendication 6, **caractérisé en ce qu'**un troisième élément de commutation (24) commute le convertisseur à oscillateur bloqué (21), les temps d'activation de l'élément de commutation (24) étant prédéterminés par une longueur de bit souhaitée par le biais du moyen de communication (20), en particulier du moyen de commande (12) .

8. Procédé de fonctionnement d'un système de transfert d'énergie pourvu d'un côté primaire (I) comportant une bobine primaire (3) et d'un côté secondaire (II) comportant un dispositif (1), ledit système étant destiné au transfert d'énergie électrique par induction et comportant au moins une bobine d'induction côté secondaire (2) reliée à un consommateur (19) et/ou à une batterie rechargeable (8) du dispositif (1) et un moyen de communication côté secondaire (20) destiné à transmettre des informations à la bobine primaire (3) pendant un processus de transfert d'énergie, le moyen de communication (20) comprenant au moins une unité de commande (12) pour la modulation de charge, le moyen de communication (20) comportant un convertisseur de tension continue (11) dont la sortie est reliée au consommateur (19) et/ou à la batterie (8) et dont l'entrée est reliée à la bobine d'induction (2), et le convertisseur de tension continue (11) étant commandé par l'unité de commande (12) avec une séquence de bits prédéterminable qui est convertie en temps d'activation correspondants pour la modulation de charge, **caractérisé en ce que** l'unité de commande (12) commande un premier élément de commutation (13) de façon à connecter ou déconnecter la sortie du convertisseur de tension continue (11) et le consommateur (19) et/ou la batterie (8).
